Europäisches Patentamt

European Patent Office

Office européen des brevets

(19)

(11) EP 0 801 303 A1

(12) EUROPEAN PATENT APPLICATION

(43) Date of publication:
15.10.1997 Bulletin 1997/42

(51) Int Cl.⁶: G01N 27/49, G01N 27/42

(21) Application number: 97302363.3

(22) Date of filing: 07.04.1997

(84) Designated Contracting States:
DE ES FR GB IT NL

(30) Priority: 12.04.1996 US 631075

(71) Applicant: TELEDYNE INDUSTRIES INC.
Los Angeles, CA 90067-3101 (US)

(72) Inventors:
• Zhang, Yining
Rowland Heights, California 91748 (US)

• Akmal, Naim
Hacienda Heights California 91745 (US)

(74) Representative: Barnfather, Karl Jon, Dr. et al
Withers & Rogers,
4, Dyer's Buildings,
Holborn
London EC1N 2JT (GB)

(54) Gas/moisture sensors for inert gases

(57) An improved electrolytic gas/moisture sensor having a perfluorinated, ion-exchange polymer cast over a pair of electrodes for functioning as a gas/moisture sensor in a few parts per billion level. The cathode and anode electrodes may be arranged in an integrated interdigital grid with the solid electrolyte with the cathode electrode having a gold surface film and the anode electrode surface being rhodium to permit moisture levels down to a few parts per billion level to be sensed without the production of recombination reactions or migration of metal ions between the electrodes.

FIG. 1.

EP 0 801 303 A1

**Description**

Field of Invention

This invention relates to improved gas sensors for sensing gases and /or moisture in inert gases including in hydrogen, oxygen and air in a few parts per billion level.

Cross-Reference

This invention is an improvement of the gas moisture sensors disclosed and claimed in U.S. patent 5,322,602 granted on June 21, 1994 and assigned to the same assignee as the present invention. The present invention is an improvement over the gas moisture sensor utilizing the treated, solid ion-exchange polymer electrolyte element arranged with and cast over the electrodes arranged in an interdigitated form of electrically conductive lines that permit the sensing of moisture in inert gases, not possible with the structure of the moisture sensor of the above prior patent.

Background of Invention

The production of semiconductors and integrated circuits now requires that the amount of moisture in the gases utilized during the fabrication process be quickly detected and measured to achieve better yields and reduce production costs. The moisture content and its measurement- depends on the type of process and also the nature of the process. The presently known, prior art types of moisture sensors include chilled mirror hygrometers, electrolytic sensors, quartz crystal oscillators and capacitive sensors. Of these prior art sensors, the electrolytic sensor is preferrable as it is relatively convenient to use and inexpensive in cost to produce, more importantly, the electrolytic sensor is capable of detecting moisture levels at the lowest levels possible by any prior art sensor. The detection of the moisture content of gases utilized in the semiconductor manufacturing industry is significant in the industry's drive to maximize their yields and keep their production costs down. At the present time, the semiconductor industry measures the amount of moisture in the inert gases utilized in their fabrication procedures and have been concentrating on the moisture content of nitrogen, argon and helium gases but now have a need to measure the moisture content in hydrogen, oxygen and air in addition to the other inert gases. The electrolytic sensors known have been determined to be incapable of sensing moisture in hydrogen, oxygen and air including the moisture sensor disclosed in U.S. patent 5,322,602.

The Teledyne moisture sensors of the electrolytic type have utilized a solid, perfluorinated, ion-exchange polymer of the type commercially available from E.I. du Pont de Nemours & Company, Inc. Wilmington, Delaware and commercially identified as a "Nafion" element as the electrolyte. The ion-exchange polymer is treated as disclosed in U.S. patent 5,322,602 to maintain the ionic conductivity of the polymer up to temperatures on the order of 180 degrees Centigrade. This treated polymer is spin-cast on an electrode array. The sensing of the moisture in an inert gas is an electrolysis process that separates the moisture (water) into hydrogen and oxygen. The moisture carrying gas diffuses through the polymer film to the electrode surface. When an electrical potential is applied across a pair of electrodes, the moisture is separated into hydrogen, $H^+$ and a hydroxyl ion, $OH^-$, due to the electrolysis; as represented by the equation(I) hereinbelow:

$$H_2O \text{ -------> } H^+ + OH^- \tag{1}$$

During the electrolysis procedure, electrons are released at the anode electrode surface by the oxidation of the hydroxyl ion pursuant to equation(2):

$$2OH^- \text{ ------> } O_2 + H_2 + 2e^- \quad \text{(anode)} \tag{2}$$

The electrons $(2e^-)$ released at the anode electrode surface flow to the cathode electrode surface where the hydrogen ion is reduced, as represented in equation(3):

$$2\,H^+ + 2e^- \text{ ----> } H_2 \quad \text{(cathode)} \tag{3}$$

This electrical current is measured and used to determine the concentration of moisture in the gas being sensed. The electrical current generated during this electrolysis procedure is proportional to the partial pressure of water in the gas undergoing analysis. Since any moisture in a gas, must diffuse through the polymer film to reach the electrode, the measure of the concentration of moisture in a gas is dependent upon the partial pressure of water (moisture), but not the flow rate. Accordingly, there is a present need for an improved electrolytic gas moisture sensor for sensing moisture levels down to a few parts per billion in inert gases including hydrogen, oxygen and environmental air that can quickly detect these low levels of moisture reliably and inexpensively.

<u>Summary of Invention</u>

The present invention provides an improved electrolytic moisture sensor for inert gases, including hydrogen, oxygen, and environmental air, that is capable of sensing and signalling the moisture content of an inert gas in a few parts per billion level. The improved and relatively inexpensive electrolytic gas sensor includes a pair of electrodes deposited on a non-moisture absorbing substrate including a thin, solid film of a perfluorinated ion-exchange polymer conductive element, treated to maintain its ionic conductivity up to temperatures of approximately 180 degrees Centigrade deposited over the pair of electrodes functioning as anode and cathode electrodes. Upon the conveyance of a moisture bearing inert gas over the ion-exchange polymer, the moisture is absorbed by the polymer and diffuses through the polymer to the electrode surface. To avoid any problems of migration of metal ions between the electrodes and recombination reactions, upon the application of a suitable electrical potential between the electrodes to effect the electrolytic action, the cathode electrode is constructed of gold while the anode electrode is constructed of rhodium. In a preferred arrangement ofthe electrodes, they are arranged in an interdigitated grid with a set distance between electrodes for sensing moisture in an inert gas down to a few parts per billion level.

<u>Brief Description of the Drawings</u>

These and other features of the present invention may be more fully appreciated when considered in light of the following specification and drawings, in which:

Fig. 1 is an exploded view of an electrolytic moisture sensing cell assembly, with portions broken away and other elements illustrated in block form, and embodying the invention;
Fig. 2 is a detached, top elevational view of the substrate of Fig. 1 having inter-digital conductive lines deposited thereon for a two electrode moisture sensing cell with an electrolyte layer theron; and
Fig. 3 is a diagrammatic representation of the electrode terminals of Fig. 2 illustrating a voltage potential and current sensing circuit connected thereto.

<u>Detailed Description of the Preferred Embodiment</u>

We have found that the presently available electrolytic sensors are not capable of sensing low levels of moisture in the few parts per billion range when the inert gases are hydrogen, oxygen and air. The reasons for this inability of present day electrolytic sensors has been discovered to be the recombination of $H_2$ and $O_2$, the products of the electrolysis of water as represented in equation(4) as follows:

$$2 \, H_2O \; \text{------>} \; 2 \, H_2 + O_2 \tag{4}$$

This recombination is represented in equation(5):

$$H_2 + O_2 \text{---------} \; \text{Recombination} \; \text{----->} \; H_2O \tag{5}$$

In addition, we have discovered that a further problem is the migration effects of metal ions across the electrodes that also contributes to the problem with present day electrolytic sensors at the desired sensing levels.

We have discovered that the background gases such as hydrogen and oxygen will drive the recombination reaction to complete the formation of water and results in a high background current output that usually overlaps the sensor output particularly at the low levels of parts per billion. The aforementioned recombination reaction is basically a surface reaction on the electrode substrates, especially on the cathode electrode surface where the $H_2$ molecules are generated (see equation (3) hereinabove) and occupy all the reaction sites on the electrode surface. On this basis, we have concluded that the chemical nature of an electrode material plays an important role in the recombination reaction and ultimately to the detection of the moisture in a gas. To this end, the electrodes made out of platinum metal when used in an electrolytic moisture sensor for sensing moisture in hydrogen gas produces a very high background signal that does not come down due to the aforementioned recombination reaction.

The problem of the migration of metal ions from one electrode to the other electrode of an electrolytic sensor causes the output signal to continuously and erroneously increase until the time is reached where the electrodes of the moisture sensor are electrically shorted together. During this process the metal particles go into an oxidation process, or stated differently they appear to dissolve and hence the amount of the metal is reduced as represented in equation(6):

$$M \longrightarrow M^{n+} + ne^- \qquad \text{(anode)} \qquad\qquad (6)$$

When a solid state electrolyte is utilized as an electrolytic moisture sensor of the type under consideration, the metallic ions migrate within the electrolyte as a result ot the electrical field as represented in equation(7):

$$M^{n+} \text{ (anode)} \cdots \text{ migration } \longrightarrow M^{n+} \text{ (cathode)} \longrightarrow M \text{ (cathode)} \qquad\qquad (7)$$

The metal ions at the space in between the cathode electrodes are reduced by a moisture carrying gas such as hydrogen, $H_2$, due to the chemical reduction process represented in equation(8):

$$M^{n+} + H_2 \longrightarrow M + H^+ \qquad\qquad (8)$$

The metal ions after being reduced are deposited at the space in between the cathode electrodes. Any left over oxidized metal ions are reduced electrochemically at the cathode electrode as represented in equation(9):

$$M^{n+} + ne^- \longrightarrow M \text{ (cathode)} \qquad\qquad (9)$$

wherein in equations (6), (7), (8) and (9) the letter M represents a metal, $M^{n+}$ a metal ion, and ne- an electron. Finally, this metallic migration deposits and fills the space between the two sensor electrodes producing an electrical short circuit and thereby rendering the sensor useless. This migration effect depends on the electrochemical oxidation potential of the selected anode material and the electrical potential applied between the sensor electrodes. For example, gold has a lower oxidation potential than platinum, which renders the migration effect a serious problem if the applied electrolizing voltage is too high. This voltage value is limited by a preset lower value in order to effect the desired electrolytic action on the moisture (water) and to maintain the electrolytic action. As a result, we have determined that the correct choice of material for the electrodes of an electrolytic sensing cell for moisture and the applied voltage to the electrodes can result in the sensing of moisture by means of an electrolytic sensor in a few parts per billion in moisture carrying ultra-pure hydrogen, ultra-pure oxygen and air without the problems of any recombination reactions and any migration of metallic ions from one electrode to another.

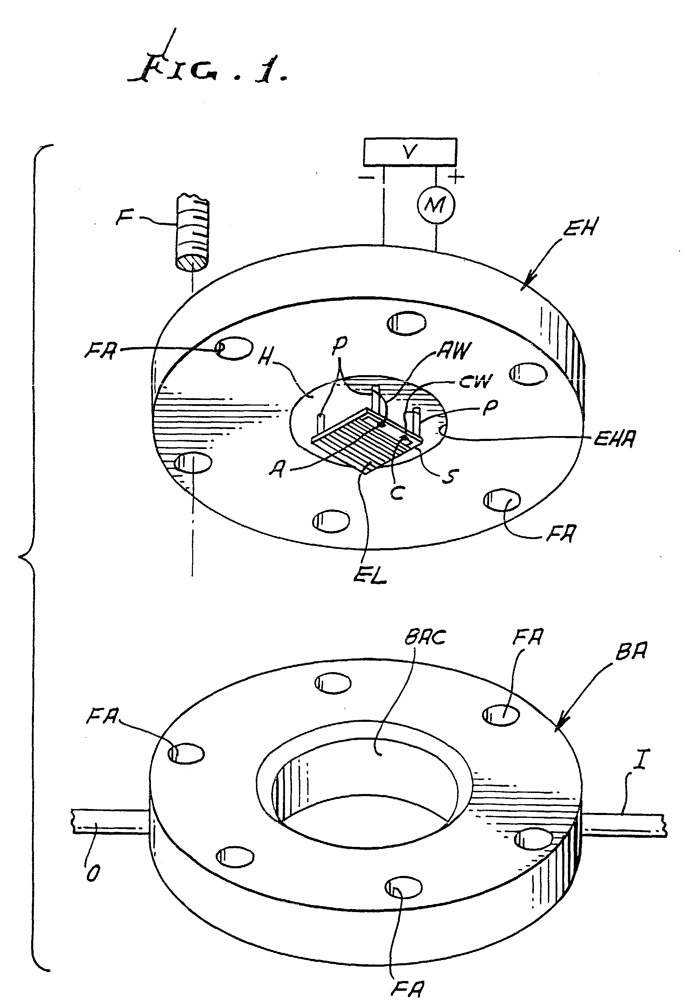

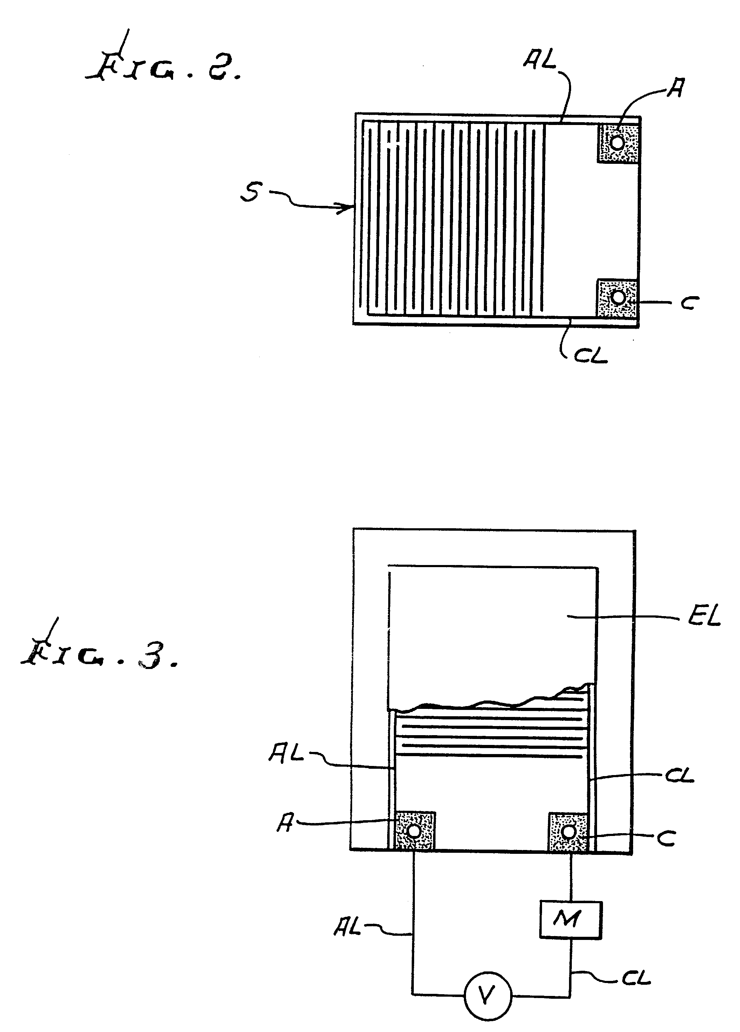

With the above concepts in mind, the details of an electrolytic moisture sensor of the type disclosed and claimed in U.S. patent 5,322,602 will be examined, as tests conducted on such a moisture sensor for the purposes of evaluating the electrode materials and applied electrolizing voltages to achieve the advantages of the gas/moisture sensor of the present invention. The disclosure of the structure of the electrolytic moisture sensor and the method of preparing the electrolyte in the form of a solid, perfluorinated, ion-exchange polymer material equilibrated with acids to maintain the ionic conductivity of the polymer up to approximately 180 degrees Centigrade as disclosed in U.S, patent 5,322,602 are incorporated herein by reference. The present disclosure of the patented moisture sensor is illustrated in the drawings to facilitate the understanding of the present invention and if further details are required, they may be obtained from the specification of said U.S. patent 5,322,602. The moisture sensor of the present invention utilizes the cast electrolyte layer prepared in accordance with the procedures describes in said '602 patent. The preferred arrangement of the electrodes is the interdigitated form of electrically conductive lines as best illustrated in Fig. 2, before the electrolyte layer EL is formed thereon. The interdigitated form of conductive lines is well known as is the method of deposition on a suitable substrate. The configuration on a substrate, illustrated in Fig. 2, is for use with a two electrode, electrolytic moisture sensor. The substrate S is constructed of a non-moisture absorbing material such as an alumina and the like. Two electrode terminals for the anode electrode A and the cathode electrode C are defined adjacent one end of the substrate S, the right hand end as illustrated in Fig. 2, to provide good electrical contacts with the conductive lines on the substrate S and to electrically connect to an external lead wire (not shown in Fig. 2). The conductive lines AL are the anode electrode lines that terminate at the anode terminal A and extend across the top face of the substrate in a plurality of parelllel conductive lines from one side of the substrate to adjacent the other side thereof as illustrated in Fig. 2.

The anode lines Al are arranged in this fashion in an interdigitated fashion with the cathode lines Cl which terminate at the cathode terminal C as is evident from examining Fig. 2. The cathode lines are arranged in the same parellel arrangement as the anode lines but spaced between the lines AL. The spacing between the lines AL and CL may be any desired spacing in accordance with the operating requirements for the moisture sensor. A typical spacing between the conductive lines AL and CL may be 0.003 inches. It should be understood that the two electrodes are defined by the total length of the lines-AL and CL from the terminal portions A and C when the electrolyte EL substantially overlies the lines. In the two electrode configuration , the appropriate voltage, selected in accordance with the desired sensitivity for the electrolytic decomposition of the gas (moisture) being sensed is selected between 10 and 70 volts. This fixed voltage, V, is coupled to the anode and cathode terminals A and C as diagrammatically illustrated in Fig. 3. For constructing a moisture sensor for sensing the moisture in a gas, the electrodes, anode and cathode are constructed of a pure metal or metal alloys. With this electrode configuration, then, and the electrolyte EL mixture prepared as described is cast over the interdigitated conductive lines AL and CL to form a solid electrolyte coating EL thereover; (see Fig. 1). This electrolytic layer EL when cast over the conductive lines AL and CL cause the conductive lines to be in intimate contact with the electrolytic layer EL deposited thereover. In addition, the electrolyte EL bridges the gap between the lines AC and CL. As is well known, the electrolyte EL constructed of the "Nafion" material is naturally hygroscopic and remains so after being treated with acid, and therefore absorbs moisture when exposed to a moisture laden gas stream. With the absorption of the moisture by the layer EL and the application of a potential between 10-70 volts across the anode and cathode terminals A and C (see Fig. 2) the gas stream will be electrolytically decomposed. In the case of a moisture laden air stream, the moisture or water, $H_2O$, in the air stream impinging on the electrolyte will cause the water to be split into hydrogen and oxygen. This action causes an electric current to flow between each of the lines AL and CL and thereby to the terminals A and C whereby the magnitude of the current flow is used as a measure of the water or moisture content in the environmental air exposed to the electrolyte EL.

Once the substrate S is constructed with the electrolyte film EL overlying the conductive lines AL and CL (see Fig. 1), the terminal A and C are provided with thin lead wires AW and CW electrically connected to the terminals A and C and extending outwardly therefrom, as illustrated in Fig. 1. The back side of the substrate S is provided with four spaced support posts P secured adjacent to the four corners of the substrate S and extending a preselected distance from the back of the substrate S. Three posts P are visible in Fig. 1. The thus defined eltrolytic sensor, is mounted to a cylindrical electrode holder EH with a central aperture EHA, as can be appreciated from viewing the drawings. As seen in Fig. 1, the central aperture EHA has a hermetic compound, non-conductive, cast therein to fill the aperture and hold the substrate S in a spaced relationship with the header H and thereby is supported in a spaced relationship with the back side of the holder plate EH. The thin lead wires AW and CW are electrically connected to a pair of adjacent posts P whereby the posts electrically conduct the currents from the sensor. The posts P extend through the header H and upwardly therefrom on the top side of the holder EH (not shown). This permits access to the conductive posts P for external electrical connections thereto.

The moisture sensor assembly is completed by the provision of block BA for mounting to the holder plate EH. The block BA is also of a cylindrical configuration with a central cavity BAC defined to accomodate the substrate S of Fig, 2 within the cavity BAC. The block BA has a pair of radially extending apertures to accommodate and secure gas conveying tubes secured thereto. The tubes are identified in Fig. 1 as the tube I or gas inlet tubing and the tube O or the gas outlet tubing. As is evident from the drawings, any gas or moisture laden air conveyed into the inlet tubing I will communicate with the cavity BAC and exit the outlet tubing O. With the assembly of the tubes I and O to the apertures BAA for the block BA, the block assembly is completed. The moisture sensor assembly is completed by mounting the holder EH to the top face of the block BA so that the bottom face of block BA, (as seen in Fig. 1), the sensor assembly on the substrate S is accommodated within the cavity BAC of the block. This effectively suspends the sensor assembly within the cavity with the electrolyte layer EL in the path of a gas stream conveyed into the inlet I and exit the tube O. This assembly is secured together by means of fasteners F accommodated by the coaxial apertures FA provided around the circumference of the plate EH and block BA, 12 fastener apertures are illustrated. A single fastener F is illustrated with apertures FA for the plate EH and block BA. With the completion of this assembly, the posts P extend outwardly of the header H on the back side, as mentioned hereinabove, so as to be accessible from that side. With the lead wires AW and CW seen in Fig. 1, the opposite side of the conductive posts P can be connected to a selected, fixed, voltage source V from the back side of the plate EH to the two posts for driving the electrochemical reaction and producing an electrical current flow between the lines AL and CL wherein the magnitude ofthe current is indicative ofthe quantity of moisture in the gas fed through the tubing I. The electrical current flow is measured by any suitable sensing circuit, denoted by the block M, for measuring the current flowing in the electrolytic layer EL upon the application of the preselected voltage from the voltage source V thereto. The sensing circuit can be readily calibrated so that the quantity of moisture can be directly read out by any presently known circuit.

Tests have heretofore been conducted by us utilizing the above sensor structure that establish that two platinum electrodes, both the anode and cathode electrodes, show the highest recombination effect but no migration effect when used to sense moisture levels of a few parts per billion in a hydrogen, $H_2$, background gas with a selected potential of 5-20 volts applied between the anode and cathode electrodes. In addition. when a pair of gold electrodes were so tested, the gold electrodes resulted in the least recombination effect and the most migration effect. A third similar test was conducted with a pair of rhodium electrodes and it was found there was very little recombination effect and virtually, no migration effect. We, therefore, concluded that the use of a gold, Au, cathode can eliminate the problem of recombination effect since gold will not catalyze the reactions.

It was found, however, that gold tested with the highest migration effect since it was found that gold ions were produced on the anode surface during the electrolysis per equation(4) hereinabove, and the gold ions migrate to the cathode electrode surface, get reduced at the cathode surface and slowly fill the gap or space between the cathode and anode electrodes, shorting the two together. The gold, Au, ions produced on the anode surface are represented by equation (10) as follows:

$$Au \text{ -------> } Au^{3+} + 3e^- \qquad \text{(anode)} \qquad\qquad (10)$$

A gold film was selected only as a cathode surface with a negative voltage or ground potential applied thereto that will not cause any oxidation reactions and no migration effects are present. In addition, no recombination effect is present, as mentioned hereinabove on the gold cathode surface. Gold, then, is the preferred metal film to be employed for the cathode electrode surface of the present invention.

When rhodium film surfaces are employed as an anode electrode and the selected electrical potential is applied, it is of a value too low to cause a reaction and no migration effect was observed when a rhodium, Rh, film is used. When the rhodium electrode was used on a cathode surface in the electrolytic sensor, it was found Rh had a small recombination effect which is attributed to the recombination reaction on the cathode surface where hydrogen, $H_2$, molecules are generated during the electrolysis of moisture and from the hydrogen background gas. The rhodium surface electrode when used as an anode electrode shows only minor recombination effects since all the catalytic sites on the anode surface are occupied by oxygen, $O_2$, molecules generated from the electrolysis of water, although there are still some hydrogen molecules coming from the background gas, which almost eliminates the recombination effect.

We, therefore, established as the preferred metals to be used in an electrolytic sensor for measuring the concentrations of moisture in small parts per billion in hydrogen and oxygen gases and air in which the problems of metal ion migration and recombination reactions have been eliminated or minimized is a gold surface for the cathode electrode and a rhodium surface for the anode electrode and such an electrolytic sensor has been successfully, produced and operated for measuring the moisture concentrations in these inert gases that were heretofore not possible.

**Claims**

1. A moisture sensor for sensing moisture concentrations in inert gases including in hydrogen, oxygen and air in a few parts per billion level comprising

    an insulative non-moisture absorbing substrate, a plurality of electrodes deposited on the substrate and a thin, solid film of a perfluorinated, ion-exchange polymer conductive element deposited over the electrodes to function as the electrolyte for the sensor, said electrolyte film having been treated with a preselected acid or acids for maintaining the ionic conductivity of said electrolyte film up to temperatures of approximately 180 degrees Centigrade and functioning as the electrolyte whereby the moisture absorbed from an inert gas conveyed over said electrolyte film is diffused through the electrolyte film to reach the electrodes upon the application of a set electrolytic potential between said electrodes, one of said electrodes being constructed of gold and functioning as the cathode electrode for the sensor and the other electrode being constructed of rhodium and functioning as the anode electrode for the sensor whereby the sensing of the moisture in said inert gases including hydrogen, oxygen and air occurs without any migration of metal ions between the electrodes and recombination reactions of hydrogen, and oxygen.

2. A moisture sensor as defined in claim 1 wherein said electrodes are arranged in an interdigitated grid of said metals with an interelectrode spacing of a set distance for measuring moisture in an inert gas down to a few parts per billion level.

3. A moisture sensor as defined in claim 1 or 2 wherein said set electrolytic potential between said electrodes is on the order of 5-20 volts is selected from said 5-20 volts range for operatively sensing moisture levels in a few parts per billion.

4. A moisture sensor as defined in claim 1, 2 or 3 wherein any moisture in an inert gas to be sensed must diffuse through the moisture sensitive electrolyte layer to reach the electrodes whereby the determination of the concentration of moisture in said inert gas is dependent upon the partial pressure of the moisture but not the flow rate of said gas.

5. A moisture sensor for sensing trace levels of moisture concentration in inert gases including in hydrogen, oxygen and air comprising

an electrolytic sensor having an anode electrode and a cathode electrode and an electrolyte arranged with said electrodes for sensing moisture in said inert gases, the improvement comprising the cathode electrode having a gold surface and the anode electrode having a rhodium surface for providing an electrical output signal representative of a moisture concentration in the gas applied to the electrolyte upon the application of a set operative electrolytic voltage between said electrodes.

6. An electrolytic moisture sensor for sensing the moisture concentrations in inert gases including in hydrogen, oxygen and air, said sensor being capable of sensing moisture levels in a few parts per billion level, comprising

an electrolytic sensor having a pair of electrodes covered with hygroscopic electrolyte for absorbing the moisture in said gases applied to the electrolyte and diffusing through the electrolyte to the electrodes, said sensor being further characterized as being capable of sensing said gases down to a few parts per billion, the improvement comprising a cathode electrode having a gold surface and the anode electrode having a rhodium surface with each surface being covered by said electrolyte, whereby upon the application of a selected operative electrolyzing potential between said electrodes the current generated by the moisture absorbed by the electrolyte is directly representative of the moisture concentration in the applied gas without producing catalytic recombination reactions of the electrolysis products and migration effects between the electrodes.

7. An electrolytic moisture sensor defined in claim 6 wherein said electrolyte comprises an acid pretreated, solid perfluorinated, ion-exchange polymer spin-cast onto the pair of electrodes.

8. An electrolytic gas sensor for sensing concentrations of a gas in a gas mixture including the concentration of moisture in a gas and having at least two electrodes, the improvement comprising two electrodes being arranged in an interdigitated grid of metal electrodes with an interelectrode spacing of a set distance for sensing in the low parts per billiion level, one of the electrodes functioning as an anode electrode and constructed and defined with a rhodium surface, and the other electrode functioning as a cathode electrode and constructed and defined with a gold surface whereby gas concentrations may be sensed without recombination reactions and/or metal ion migration problems.

# FIG. 1.

FIG. 2.

FIG. 3.

EP 0 801 303 A1

| | European Patent Office | EUROPEAN SEARCH REPORT | Application Number EP 97 30 2363 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | US 5 322 602 A (RAZAQ ) <br><br> * abstract * <br> * column 2, line 59 - line 63; figure 9 * <br> --- | 1,2,5,6, 8 | G01N27/49 <br> G01N27/42 |
| Y | EP 0 239 190 A (SENSIDYNE INC.) <br><br> * abstract * <br> * column 8, line 27 - line 30; claim 4; figure 1 * <br> --- | 1,2,5,6, 8 | |
| A | US 4 052 268 A (BLURTON ET AL.) <br> * abstract; claim 1; figure 2 * <br> ----- | 1,5,6 | |
| | | | TECHNICAL FIELDS SEARCHED (Int.Cl.6) <br><br> G01N |

The present search report has been drawn up for all claims

| Place of search | Date of completion of the search | Examiner |
|---|---|---|
| THE HAGUE | 24 June 1997 | Kempf, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10